# EUROPÄISCHE PATENTSCHRIFT

(11) **EP 0 836 014 B1**
(45) Veröffentlichungstag und Bekanntmachung des Hinweises auf die Patenterteilung: **10.05.2000**
(21) Anmeldenummer: 97116347.2
(22) Anmeldetag: 19.09.1997
(51) Int. Cl.: F16B 13/10, B60N 3/02

(54) **Einrichtung zur Befestigung einer Schlaufe aus biegsamem Material**
Device for fastening a loop made of flexible material
Dispositif de fixation d'une boucle en matériau flexible

(30) Priorität: 10.10.1996 DE 19641701
(43) Veröffentlichungstag der Anmeldung: 15.04.1998
(73) Patentinhaber: DaimlerChrysler AG, 70567 Stuttgart (DE)
(72) Erfinder: Knoll, Wolfgang, 71665 Vaihingen (DE)

(56) Entgegenhaltungen:
- EP-A- 0 096 682
- DE-A- 4 406 913
- DE-B- 1 238 795
- DE-U- 7 434 438
- US-A- 1 725 700

## Beschreibung

Die Erfindung betrifft eine Einrichtung zur Befestigung der Enden einer Schlaufe aus biegsamem Material an einem flachen Bauteil.

Um die Enden einer Schlaufe an einem Bauteil befestigen zu können, sind bisher besondere Befestigungsmittel wie beispielsweise Nieten oder Schrauben, erforderlich gewesen.

Hier eine Vereinfachung zu schaffen, ist das Problem, mit dem sich die Erfindung beschäftigt und das sie mit einer Ausgestaltung der Enden einer gattungsgemäßen Schlaufe nach den kennzeichnenden Merkmalen des Patentanspruchs 1 löst.

Die Erfindung beruht auf folgendem Gedanken.

Für eine Befestigung von mit etwa 90°-Winkeln versteiften Schlaufenenden an einem flachen Bauteil reicht praktisch ein Schlitz in der Länge der Breite des Schlaufen-Bandmaterials aus. Durch einen solchen Schlitz können die mit den endseitigen Schenkeln der Versteifungs-Winkel aneinanderliegenden Schlaufenden eingeschoben werden, bis die Erhebungen an den jeweils zum Schlaufeninneren liegenden Schenkeln der Winkel an dem flachen, den Schlitz aufweisenden, Bauteil zur Anlage kommen. In dieser Montagelage werden die in die Schlaufenenden integrierten Versteifungs-Winkel um jeweils 90° gegeneinander verschwenkt, wodurch die zum Schlaufeninneren gelegenen Schenkel der Winkel zur gegenseitigen Anlage gelangen. Die an den freien Enden der Schlaufen liegenden Schenkel der Winkel liegen dann an der von der geschlossenen Schlaufe abgewandten Seite des flachen Bauteiles flach an. In diesem Zustand muß lediglich noch dafür gesorgt werden, daß die zum Schlaufeninneren gelegenen Winkel nicht auseinanderklappen können. Ist dies sichergestellt, so ist die Schlaufe an ihren freien Bandenden eindeutig an dem flachen Bauteil fixiert und zwar zwischen den an den Enden der Schlaufen liegenden Schenkeln der Winkel einerseits und den Erhebungen in den zweiten, zum Schlaufeninneren gerichteten Schenkeln dieser Winkel andererseits.

Das Zusammenhalten der zum Schlaufeninneren gerichteten aneinanderliegenden Versteifungswinkel kann auf einfachste Weise durch eine Klammer beliebiger Art erfolgen. Kräfte werden für das Zusammenhalten der Winkel-Schenkel nicht benötigt, wenn von der Schlaufe in Richtung der Schlaufenenden im wesentlichen lediglich Zugkräfte ausgehen.

Zweckmäßige Ausgestaltungen der Erfindung sind Gegenstand der Unteransprüche.

Die Befestigung eines Winkelpaares in einem Bauteil in der Art, daß jeweils ein Schenkel eines Winkels durch einen Schlitz eines Bauteiles gesteckt wird und daß danach jeder der beiden Winkel um 90° gegeneinander verschwenkt wird, ist bei einer Klammer, durch die ein zweites Bauteil an einem ersten Bauteil befestigt werden soll, an sich bereits aus DE 44 06 913 A bekannt. Bei jener bekannten Einrichtung wird auf diese Weise allerdings keine Schlaufe an einem Bauteil befestigt.

Ein Ausführungsbeispiel der Erfindung ist in der Zeichnung dargestellt.

Es zeigen
- Fig. 1: ein an einem Bauteil befestigtes Schlaufenende im Schnitt,
- Fig. 2: eine erste Montagestellung der Befestigungseinrichtung für das Ende einer Schlaufe nach Fig. 1.

Eine Schlaufe besteht aus einem doppellagigen biegsamen Kunststoffmaterial 1 in Bandform. Zwischen die beiden Lagen 2,3 des bandförmigen Kunststoffmaterials 1 ist an jedem Ende des Schlaufenbandes ein jeweils rechtwinkliger, metallener Winkel 4 fest eingebracht. Der zum Inneren der Schlaufe gerichtete Schenkel des Winkels 4 ist jeweils mit einer Erhebung 5 in Form einer Sicke versehen. Bei den aneinanderliegenden, zum Schlaufeninneren weisenden Schenkeln des Winkels 4 wölben sich die Erhebungen 5 voneinander weg. Dadurch ist eine Fixierung an einem Blech 6, in das die freien Enden der Schlaufe durch einen Schlitz 7 eingeführt sind, definiert.

Für ein Aneinanderhalten der zum Schlaufeninneren weisenden Schenkel der Winkel 4 sorgt auf Dauer ein zweites flaches Bauteil 8, das mit parallelem Abstand fest mit dem ersten Bauteil 6 verbunden ist. Zu diesem Zweck weist dieses zweite Bauteil 8 einen dem Schlitz 7 des ersten Bauteiles 6 entsprechenden Schlitz 9 auf, durch den der geschlossene Teil der Schlaufe gezogen ist.

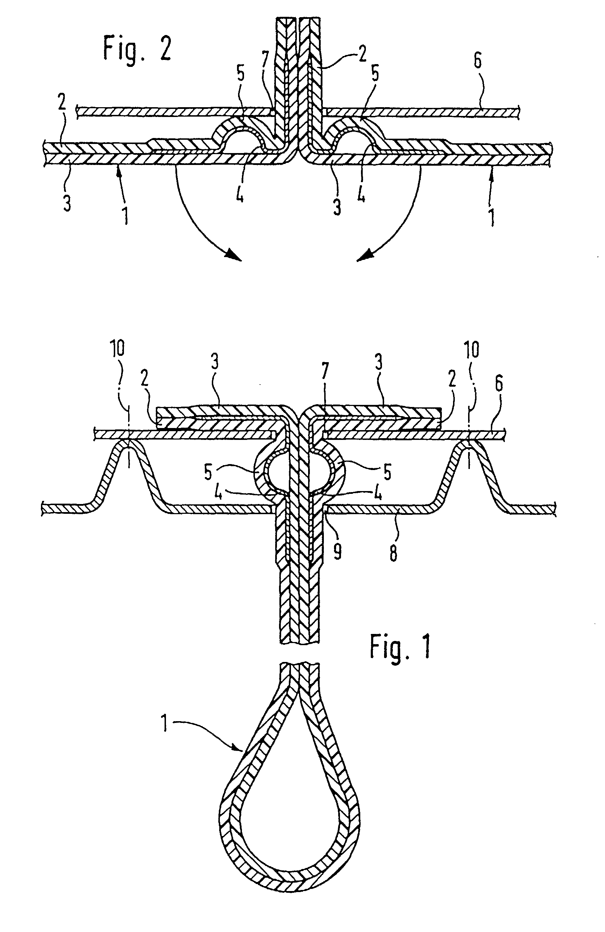

Den ersten Montageschritt für eine solche Befestigung der Enden einer Schlaufe zeigt die Fig. 2. Die Befestigung wird von diesem Zustand aus durch gegenseitiges Aneinanderklappen zum Inneren der Schlaufe gerichteter Schenkel der Winkel 4 in Richtung der in Fig. 2 angegebenen Pfeile erreicht.

Bei einem dritten und letzten Montageschritt wird die geschlossene Schlaufe durch einen Schlitz 9 in einem zweiten Bauteil 8 gezogen. Indem das zweite Bauteil 8 an dem ersten Bauteil 6 starr befestigt ist und zumindest im Bereich seines Schlitzes 9 relativ starr ist, liegt eine sichere Befestigungsart für die Schlaufe vor. Die Befestigung des zweiten an dem ersten Bauteil 6 bzw. 8 ist in den Bereichen 10 gegeben.

Im Kraftfahrzeugbau kann eine solche Schlaufenbefestigung beispielsweise an einem aufklappbaren mit einer Verkleidung zu versehenden Deckel erfolgen. In diesem Fall bildet das aufklappbare Deckelteil das Bauteil 6 und eine an dem Deckel mit Abstand zu befestigende Verkleidung das zweite Bauteil 8. Der Winkel 4 kann aus Federstahl bestehen und die Erhebung 5 als eine Sicke angeformt sein.

## Patentansprüche

1. Einrichtung zur Befestigung der Enden einer Schlaufe aus biegsamem Bandmaterial an einem flachen Bauteil,
**dadurch gekennzeichnet,**
daß die Endbereiche des Schlaufen-Bandes mit jeweils einem etwa 90°-Winkel (4) aus schwer verformbarem, flachen Material versteift sind, wobei die jeweils in Richtung des geschlossenen Bereiches der Schlaufe liegenden Schenkel der Winkel (4) jeweils eine senkrecht zu ihrer flachen Seite gewölbte Erhebung (5) aufweisen und daß diese Erhebungen (5) zur gleichen Seite des Schlaufen-Bandes gewölbt sind.

2. Befestigungseinrichtung nach Anspruch 1,
**dadurch gekennzeichnet,**
daß die Winkel (4)aus Metall sind.

3. Befestigungseinrichtung nach Anspruch 1 oder 2,
**dadurch gekennzeichnet,**
daß das Metall ein Federstahl ist.

4. Befestigungseinrichtung nach einem der vorhergehenden Ansprüche,
**dadurch gekennzeichnet,**
daß die Erhebungen (5) als Sicken ausgestaltet sind.

## Claims

1. Device for attaching the ends of a loop, made of flexible sheet-material, onto a flat component,
characterized in that
the end areas of the sheet material are each reinforced by angle-pieces, of approximately 90°, made from inflexible, flat material, whereby the sides, of the angle-pieces (4), lying in the direction of the closed area of the loop, each have an elevation (5), arched vertically in relation their flat sides, and that these elevations (5) are arched on the same side of the loop strip.

2. Attachment device in accordance with claim 1,
characterized in that
the angle-pieces (4) are made of metal.

3. Attachment device in accordance with either claim 1 or claim 2,
characterized in that
the metal is a spring steel.

4. Attachment device in accordance with one of the preceding claims,
characterized in that
the elevations (5) are in the form of corrugations.

## Revendications

1. Dispositif destiné à fixer les extrémités d'une boucle en un matériau en bande flexible, à une pièce plate,
**caractérisé** en ce que les zones d'extrémité de la bande de la boucle sont rigidifiées chacune à l'aide d'une cornière à 90° (4) en un matériau plat, difficilement déformable, l'aile de chacune des cornières (4), dirigée vers la zone fermée de la boucle, présentant un bossage (5) bombé perpendiculairement à leur face plate, et en ce que ces bossages (5) sont bombés vers le même côté de la bande de la boucle.

2. Dispositif de fixation selon la revendication 1, **caractérisé** en ce que les cornières (4) sont en métal.

3. Dispositif de fixation selon la revendication 1 ou 2, **caractérisé** en ce que le métal est un acier à ressort.

4. Dispositif de fixation selon l'une des revendications précédentes, **caractérisé** en ce que les bossages (5) sont réalisés en tant que moulure de formage.
